# EUROPÄISCHE PATENTSCHRIFT

(11) **EP 2 334 586 B1**
(45) Veröffentlichungstag und Bekanntmachung des Hinweises auf die Patenterteilung: **20.02.2013**
(21) Anmeldenummer: 09736179.4
(22) Anmeldetag: 07.10.2009
(51) Int. Cl.: B66C 1/66, B66C 1/10, F03D 1/00

(54) **ANSCHLAGBÜGEL**
CONNECTION BRACKET
ÉTRIER DE BUTÉE

(30) Priorität: 13.10.2008 DE 102008051015
(43) Veröffentlichungstag der Anmeldung: 22.06.2011
(73) Patentinhaber: Spanset-Secutex GmbH, 52511 Geilenkirchen (DE)
(72) Erfinder: FRANKE, Boris, 52525 Heinsberg (DE)
(74) Vertreter: Cohausz & Florack
(86) Internationale Anmeldenummer: PCT/EP2009/063027
(87) Internationale Veröffentlichungsnummer: WO 2010/043523

(56) Entgegenhaltungen:
- WO-A1-2008/000262
- WO-A2-02/04321

## Beschreibung

Die Erfindung betrifft einen Anschlagbügel, der dazu vorgesehen ist, ein Anschlagmittel mit einem Flansch zu verbinden, bei dem es sich insbesondere um den Flansch eines Turmelements für eine Windkraftanlage handelt. Als mit dem Anschlagbügel zu verkoppelnde Anschlagmittel dienen dabei typischerweise Schäkel, Haken, Ringe oder dergleichen, über die ein Tragmittel, wie beispielsweise ein Seil, Band oder Gurt, lösbar mit dem Anschlagbügel verkoppelt werden kann.

Die die Nabe eines Rotors tragenden Stahltürme moderner Windkraftanlagen sind üblicherweise aus mehreren vorgefertigten, hohlzylindrischen Turmelementen zusammengesetzt. An dem Fuß- und Kopfende dieser Turmelemente sind dabei üblicherweise nach innen gerichtete Flansche angeformt. In diese Flansche sind in regelmäßigen Abständen Durchgangsöffnungen eingeformt, die im montierten Zustand fluchtend zu den Durchgangsöffnungen des zugeordneten Flansches des jeweils nächst höher bzw. nächst niedriger angeordneten Turmelements ausgerichtet sind. Durch die Durchgangsöffnungen werden dann Schraubenbolzen gesteckt, um die Turmelemente miteinander zu verbinden.

Heutzutage werden Windkraftanlagen mit Nabenhöhen von über 100 m gebaut, so dass die rohrartigen Turmelemente mit einer Wandstärke von 20 mm bis 40 mm leicht eine Masse im hohen zweistelligen Tonnenbereich erreichen.

Der Durchmesser der vorgefertigten Turmelemente ist in der Regel deutlich geringer als deren Länge. Deshalb werden die Turmelemente liegend zum Standort der zu errichtenden Windanlage transportiert. Am Windkraftanlagenstandort müssen sie daher nicht nur mittels eines geeigneten Krans von dem zur Beförderung genutzten Schwertransporter oder Schiff angehoben und in ihre Endposition geschwenkt werden, sondern sie müssen zusätzlich von der waagerechten Ausrichtung in eine senkrechte Ausrichtung gedreht werden, um sie auf ein Fundament bzw. ein bereits aufgestelltes Turmelement abzusetzen.

Um dies mit konventionellen Hebemitteln zu ermöglichen, werden üblicherweise an die Flansche der Turmelemente Anschlagbügel der hier in Rede stehenden Art befestigt. Dazu werden in der Regel die in den Flanschen vorhandenen Durchgangsöffnungen genutzt.

An die Anschlagbügel werden hohe Anforderungen hinsichtlich ihrer Belastbarkeit und Gebrauchseigenschaften gestellt. So müssen sie nicht nur eine ausreichende Tragfähigkeit aufweisen und die rauen Betriebsbedingungen sicher ertragen können, sondern sie müssen auch die zielgenaue Ausrichtung der Turmelemente mit den an der Baustelle zur Verfügung stehenden einfachen Hilfsmitteln ermöglichen. Gleichzeitig müssen sie so gestaltet sein, dass die Gefahr einer Verletzung von Personal auf der Baustelle minimiert ist.

Zum Anheben und Ausrichten der Turmelemente werden typischerweise vier Anschlagelemente am oberen Ende des Turmelements vorhandenen Kopfflansch und zwei Anschlagelemente am unteren Ende des Turmelements vorhandenen Fußflansch benötigt. Die vier dem Kopfflansch zugeordneten Anschlagelemente werden in gleichmäßigen Winkelabständen über den Umfang des Kopfflansches verteilt und dort so verschraubt, dass sich die oberen beiden Anschlagelemente und die unteren beiden Anschlagelemente bei noch liegendem Turmelement jeweils im Wesentlichen auf einer Höhe befinden.

Die beiden dem Fußflansch zugeordneten Anschlagelemente werden am liegenden Turmelement jeweils oberhalb von dessen Mittellinie mit einem Abstand zueinander angeschraubt, der ausreichend groß ist, um das Turmelement beim Anheben von dem jeweiligen Transporter und Aufrichten in einer bezogen auf seine Längsachse stabilen Lage zu halten.

Zum Aufrichten eines Turmelements wird an die beiden bei liegendem Turmelement oberen Anschlagelemente des Kopfflansches beispielsweise mittels jeweils eines Schäkels ein erstes Ende eines Tragseiles angeschlagen. Jedes dieser Seile wird dann über eine Seilrolle geführt, die am Haken eines ersten Kranes hängt, und mit seinem anderen Ende wiederum mittels eines geeigneten Anschlagmittels an das sich jeweils unter dem zugeordneten oberen Anschlagelement befindliche untere Anschlagelement angekoppelt.

In vergleichbarer Weise werden die beiden Anschlagelemente des Fußflansches mittels eines Seiles mit dem Haken eines zweiten Kranes verbunden.

Zum Aufrichten des Turmelementes wird dieses unter Beibehaltung seiner horizontalen Ausrichtung von den beiden Kränen zunächst gleichmäßig angehoben, bis eine ausreichende Bodenfreiheit erreicht ist. Dann wird das dem Kopfflansch zugeordnete Ende des Turmelements in einem stärkeren Maße angehoben, so dass das Turmelement kontinuierlich in eine senkrechte Ausrichtung übergeführt wird. Die Seilrollen gewährleisten dabei, dass zu jedem Zeitpunkt die Kräfte in den Seilsträngen gleichmäßig in alle vier am Kopfflansch angeschraubten Anschlagelemente eingeleitet werden, während die beiden am Fußflansch angebrachten Anschlagelemente als Gegenlager dienen.

Sobald das Turmelement senkrecht ausgerichtet ist, sind die dem Fußflansch zugeordneten Tragmittel entlastet und die entsprechenden Anschlagelemente können abmontiert werden. Das Turmelement hängt in diesem Zustand nur noch an den vier am Kopfflansch angeschraubten Anschlagelementen. Nach Entfernen der Anschlagelemente vom Fußflansch kann das Turmelement in die vorgesehene Endposition eingeschwenkt werden und dort mit dem Fundament oder dem bereits vorhandenen Turmelement verschraubt werden.

Während des Aufrichtvorgangs sind die jeweils eingesetzten Tragmittel (Seil, Band) erheblichen Belastungen unterworfen. So müssen sie nicht nur die Last des Turmelements aufnehmen, sondern werden dabei auch noch relativ zu den Seilrollen der Kräne bewegt. Insbesondere bei dem dem Fußflansch des aufzurichtenden Turmelements zugeordneten Tragmittel kommt die Gefahr hinzu, dass das Tragmittel beim Aufrichten über eine der vergleichbar scharfkantigen Außenkanten des Turms gezogen wird. Aufgrund der während des Aufrichtens dort unvermeidbar stattfindenden Relativbewegungen führt dies in dem betroffenen Bereich des Tragmittels zu einem erheblichen Verschleiß durch Scheuern. Dieser kann sehr schnell so weit gehen, dass das Tragmittel unbrauchbar wird. Aus diesem Grund besteht die Vorschrift, dass die zum Anschlagen der Tragmittel an den Flansch verwendeten Anschlagelemente das jeweilige Tragmittel so führen müssen, dass ein Scheuern an einer Außenkante des Turmelements ausgeschlossen ist.

Diese Anforderung lässt sich mit einem aus der Praxis bekannten "Flansch-Ringbock" erfüllen. Die bekannten Flansch-Ringböcke sind aus einem plattenförmigen Befestigungsabschnitt, der mit Öffnungen zum Anschrauben an einen Flansch des jeweiligen Turms versehen ist, und einem schwenkbar an dem Befestigungsabschnitt gelagerten Ringelement zusammengesetzt.

Ein bekanntes "Flansch-Ringbock" ist in den Dokument WO 2008/000262 A1 offenbart.

An das Ringelement sind bei dem bekannten Flanschbock tangential zwei zueinander koaxial ausgerichtete Bolzen angeschweißt, die in entsprechenden Lageröffnungen des Befestigungsabschnitts sitzen und so die Schwenkachse des Ringelements definieren. Die Lageröffnungen sind dabei an einer Längsseite des Befestigungsabschnitts in Bezug auf dessen Befestigungsöffnungen so angeordnet, dass die Schwenkachse bei an dem jeweiligen Flansch eines Turmelements montiertem Flansch-Ringbock außerhalb des Umfangs des Turmelements angeordnet ist. Auf diese Weise ist sichergestellt, dass das Tragmittel beim Verschwenken des Turmelements jeweils so geführt ist, dass es mit keiner Kante des Turmelements in Berührung kommt.

Jedoch sind die bekannten Flansch-Ringböcke aufgrund ihrer aufwändigen Gestaltung teuer in der Herstellung. Zudem müssen sie ausreichend massiv ausgelegt werden, um die im praktischen Einsatz auf ihnen lastenden Belastungen mit der notwendigen Sicherheit aufnehmen zu können. Dies führt zu einem so hohen Gewicht, dass ihre Handhabung auf der Baustelle beschwerlich ist.

Vor diesem Hintergrund bestand die Aufgabe der Erfindung darin, ein kostengünstig herstellbares Anschlagelement zur Verfügung zu stellen, bei dem trotz eines verminderten Gewichts eine hohe Gebrauchssicherheit gewährleistet ist.

Erfindungsgemäß ist diese Aufgabe durch den Gegenstand des Anspruchs 1 gelöst worden. Vorteilhafte Ausgestaltungen dieser Lösung sind in den von Anspruch 1 abhängigen Ansprüchen angegeben.

Ein erfindungsgemäßer Anschlagbügel weist zwei Befestigungsabschnitte auf, über die, wie beim voranstehend erläuterten Stand der Technik, der Anschlagbügel an den jeweiligen Flansch angeschraubt werden kann. Die Befestigungsabschnitte besitzen dazu eine Anlagefläche, die in der Regel eben sein wird und zum Anlegen des Anschlagbügels an den jeweiligen Flansch dient.

Die Befestigungsabschnitte eines erfindungsgemäßen Anschlagbügels sind mit Abstand zueinander angeordnet, wobei zwischen ihnen ein Anschlagabschnitt vorhanden ist, der den Abstand zwischen den Befestigungsabschnitten überbrückt.

Der Anschlagabschnitt ist dabei aus zwei jeweils fest mit einem der Befestigungsabschnitte verbundenen und auf diesen stehenden Stützabschnitten und einem von diesen getragenen und fest mit diesen verbundenen Mittelabschnitt gebildet, so dass der Anschlagabschnitt die Distanz zwischen den Befestigungsabschnitten mit Abstand zu der Ebene der Anlageflächen überspannt.

Für die Funktion eines erfindungsgemäßen Anschlagbügels wesentlich ist dabei, dass in Draufsicht von der den Anlageflächen abgewandten Seite des Anschlagbügels her gesehen die Mittellinie des Mittelabschnitts des Anschlagabschnitts außerhalb der Einhüllenden der Befestigungsabschnitte angeordnet ist. Auf diese Weise wird im praktischen Einsatz das mit einem erfindungsgemäßen Anschlagbügel verkoppelte Tragmittel stets so geführt, dass es seitlich an dem jeweils anzuhebenden Bauteil vorbei verläuft. Je weiter die Mittellinie des Mittelabschnitts des Anschlagabschnitts dabei außerhalb der Einhüllenden der Befestigungsabschnitte liegt, desto größer ist die Sicherheit, dass es zu keiner Beschädigung des jeweiligen Tragmittels kommt.

Dementsprechend ist bei einer in der Praxis besonders brauchbaren Ausgestaltung der Erfindung in Draufsicht von der den Anlageflächen abgewandten Seite des Anschlagbügels her gesehen der Mittelabschnitt des Anschlagabschnitts insgesamt außerhalb der Einhüllenden der Befestigungsabschnitte angeordnet. Diese Ausgestaltung der Erfindung erweist sich insbesondere dann als vorteilhaft, wenn das jeweilige Tragmittel direkt, d. h. ohne zwischengeschaltetes Anschlagmittel, an dem Anschlagbügel angreift.

Ein erfindungsgemäßer Anschlagbügel weist eine besonders einfach herzustellende Gestalt auf. Dabei kann, ohne dass es dazu größeren Aufwands bedarf, im Bereich seines Anschlagabschnitts so ausreichend Raum zur Verfügung gestellt werden, dass jede Art von geeignetem Anschlagmittel (beispielsweise Schäkel, Haken, Ring) dort auf einfache Weise mit der erforderlichen Beweglichkeit montiert werden kann. Besonderer zusätzlicher Bauelemente bedarf es dazu nicht.

Stattdessen zeichnet sich ein erfindungsgemäßer Anschlagbügel dadurch aus, dass seine einzelnen Abschnitte fest und unlösbar miteinander verbunden sind. Diese Einteiligkeit erlaubt es, den erfindungsgemäßen Bügel aus einem Stück, d. h. einstückig, beispielsweise durch Schmieden herzustellen.

Dadurch, dass mindestens die dem seitlich von den Stützabschnitten des Anschlagabschnitts begrenzten Raum zugeordneten Innenseiten des Anschlagabschnitts spitzbogenförmig aufeinander zulaufen, wird erreicht, dass das jeweils mit dem Anschlagbügel zusammenwirkende Anschlagmittel oder das jeweils direkt an den Anschlagbügel angreifende Tragmittel unter Last selbsttätig an die für die zu bewältigende Tragaufgabe optimierte Position am Mittelabschnitt des Anschlagabschnitts gelangt. Dazu kann der Anschlagabschnitt des erfindungsgemäßen Anschlagbügels so ausgebildet sein, dass die Innenseiten der Stützabschnitte umgekehrt V-förmig aufeinander zulaufen.

Dass das mit dem erfindungsgemäßen Anschlagbügel zusammenwirkende Anschlagmittel oder das direkt mit ihm verkoppelte Tragmittel unter Last seine jeweils optimale Position findet, kann auch dadurch unterstützt werden, dass der Bereich, in dem die Innenseiten der Stützabschnitte aufeinander treffen, nach Art einer Kehle ausgerundet ist. Besonders praxisgerecht ist dabei ein Ausrundungsradius der Kehle, der nur geringfügig größer ist als der Radius des jeweiligen Anschlagelements. So kann der Ausrundungsradius der jeweils vorhandenen Kehle beispielsweise dem Außenradius eines Normschäkels entsprechen, so dass die weitaus überwiegende Zahl der in der Praxis eingesetzten Schäkel optimal mit einem erfindungsgemäßen Anschlagbügel zusammenwirken kann.

Unterstützt werden kann der optimale Sitz des jeweiligen Anschlagmittels oder des direkt mit dem erfindungsgemäßen Anschlagbügel zusammenwirkenden Tragmittels dadurch, dass von dem von dem Anschlagabschnitt seitlich begrenzten Raum her in den Mittelabschnitt eine kehlenartige Ausnehmung eingeformt ist, welche einen Sitz für das Anschlagmittel bildet. Die betreffende Ausnehmung kann dabei insbesondere dann nach Art einer eine Schwenkachse definierenden Lagerung wirken, wenn die Ausnehmung mindestens auf einer Seite des Anschlagelements bis zur freien Oberseite des Mittelabschnitts reicht. Auf diese Weise lässt sich erreichen, dass das jeweilige Anschlag- bzw. Tragmittel auch im Bereich seiner Umlenkung um den Mittelabschnitt definiert geführt ist.

Indem die Breite der Stützabschnitte ausgehend von dem ihnen jeweils zugeordneten Befestigungsabschnitt in Richtung des Mittelabschnitts abnimmt, kann erreicht werden, dass die im praktischen Einsatz auf den Anschlagbügel wirkenden Zugkräfte in einer hinsichtlich des Belastungszustandes optimalen Ausrichtung in den Anschlagbügel eingeleitet werden. Wenn sich die Stützabschnitte zum Mittelabschnitt hin verjüngen, kann auch bei Zug mit einem Anteil in Richtung des Flansches gewährleistet werden, dass die Kraft im Wesentlichen über den Mittelabschnitt eingeleitet wird und das Tragmittel an dem Anschlagbügel nicht verrutscht. Zudem ist ein erfindungsgemäßer Anschlagbügel auf diese Weise bei verringertem Gewicht besonders gut an den Spannungsverlauf im Stützabschnitt unter den in der Praxis auftretenden Belastungen angepasst.

Im Übergangsbereich vom Stützabschnitt zum Mittelabschnitt kann ebenfalls eine Ausnehmung in den Stützabschnitt eingeformt sein, so dass die Breite des Stützabschnittes in einer Zone in dem Übergangsbereich zum Mittelabschnitt der Breite des Mittelabschnittes entspricht. Auf diese Weise lässt sich gewährleisten, dass ein Anschlagmittel auch dann, wenn es eng an dem Mittelabschnitt anliegt, in seiner Längsausdehnung zu den Befestigungsabschnitten hin verschwenkt werden kann. Zu diesem Zweck kann in mindestens einem der Übergangsbereiche, in denen die Stützabschnitte zum Mittelabschnitt übergehen, von dem vom Anschlagabschnitt seitlich umgrenzten Raum her eine kehlenartige Ausnehmung eingeformt sein. Eine optimale Beweglichkeit des jeweiligen Anschlagmittels in der von dem Anschlagabschnitt des erfindungsgemäßen Anschlagbügels umgrenzten Öffnung ergibt sich dann, wenn die Ausnehmung bis zur Außenseite des jeweiligen Stützabschnitts reicht.

Eine besonders einfache Gestaltung des erfindungsgemäßen Anschlagbügels bei gleichzeitig besonders vielseitiger Verwendbarkeit ergibt sich, wenn der Anschlagbügel spiegelsymmetrisch zu einer Ebene ausgebildet ist, die senkrecht zu den Anlageflächen der Befestigungsabschnitte ausgerichtet ist.

Grundsätzlich ist jede beliebige Befestigung eines erfindungsgemäßen Anschlagbügels am jeweiligen Flansch denkbar, die ausreichend fest ist, um die während eines Hebe- und Ausrichtvorgangs auftretenden Belastungen aufzunehmen. Besonders einfach lässt sich die Befestigung dann bewerkstelligen, wenn an dem jeweils zu transportierenden Bauteil vorhandene Durchgangsöffnungen dazu genutzt werden. Dies gilt insbesondere dann, wenn die Durchgangsöffnungen wie bei den Flanschen eines Turms für eine Windkraftanlage die Abmessungen von konventionellen Schraubenöffnungen aufweisen. In diesem Fall lässt sich eine einfache Schraubbefestigung eines erfindungsgemäßen Anschlagbügels dadurch bewerkstelligen, dass in die Befestigungsabschnitte senkrecht zur Anlagefläche ausgerichtete Durchgangsöffnungen eingeformt sind. Mindestens eine dieser Durchgangsöffnungen ist dabei vorteilhafterweise als Langloch ausgebildet, um die jeweiligen Durchgangsöffnungen von Anschlagbügel und zu transportierender Last auf einfache Weise auch dann miteinander zur Deckung bringen zu können, wenn die Durchgangsöffnungen der zur transportierenden Last in unterschiedlichen Abständen angeordnet sind. Auf diese Weise können nicht nur Toleranzen ausgeglichen werden, sondern der erfindungsgemäße Anschlagbügel kann bei unveränderten Abmessungen an einer großen Zahl unterschiedlicher Bauteile eingesetzt werden. Dadurch ist es möglich, das Langloch eines der Befestigungsabschnitte mit mehreren Bohrungen des Flansches in Deckung zu bringen und es mit mehr als einer Schraube zu verschrauben. Dadurch lassen sich die Belastungen für die jeweilige Schraube deutlich verringern.

In solchen Fällen, in denen die jeweiligen Durchgangsöffnungen auf einem Kreisbogen angeordnet sind, wie es beispielsweise bei den Öffnungen eines Flansches eines Turms einer Windkraftanlage der Fall ist, erweist es sich dabei als günstig, wenn das Langloch bogenförmig ausgebildet ist. Eine besonders große Vielseitigkeit der Verwendung eines erfindungsgemäß gestalteten Anschlagbügels ergibt sich dabei dann, wenn beide Befestigungsabschnitte ein bogenförmiges Langloch aufweisen und die Mittellinien der Langlöcher auf einem gemeinsamen Bogen angeordnet sind. Dadurch ist es möglich, das Langloch eines der Befestigungsabschnitte mit mehreren Bohrungen des Flansches in Deckung zu bringen und es mit mehr als einer Schraube zu verschrauben. Dadurch lassen sich die Belastungen für die jeweilige Schraube deutlich verringern. Alternativ kann es jedoch auch zweckmäßig sein, wenn die Bögen, auf denen die Mittellinien der Langlöcher der beiden Befestigungsabschnitte eines erfindungsgemäßen Anschlagbügels liegen, unterschiedlich gekrümmt sind, so dass derselbe Anschlagbügel für Flansche mit unterschiedlichem Lochkreisdurchmesser verwendet werden kann.

Insbesondere dann, wenn die Breite des ebenen Auflageabschnittes größer oder gleich der Länge eines durch den Winkel, den die Innenflächen der Stützabschnitte einschließen, und den Radius der Ausrundung gebildeten Kreisumfangabschnittes ist, kann sich ein zum Anschlagen des Tragmittels verwendeter Schäkel auf dem Auflageabschnitt abrollen.

Nachfolgend wird die Erfindung anhand einer Ausführungsbeispiele darstellenden Zeichnung näher erläutert. Es zeigen jeweils schematisch:

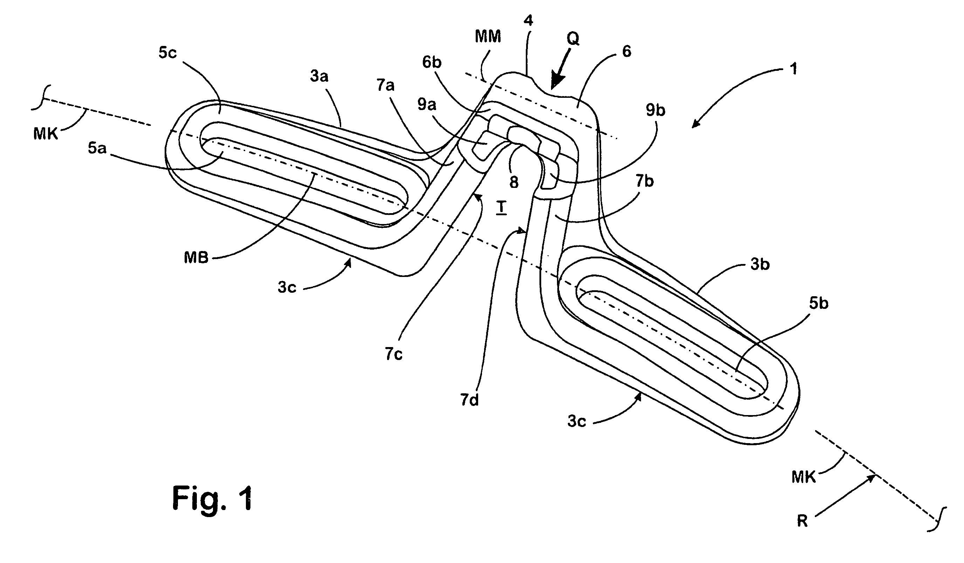

- Fig. 1: einen Anschlagbügel in perspektivischer Ansicht;
- Fig. 2: den Anschlagbügel in der Draufsicht;
- Fig. 3: den Anschlagbügel in einer Seitenansicht aus der in Fig. 2 eingetragenen Richtung A;
- Fig. 4: den Anschlagbügel in einer Seitenansicht aus der in Fig. 2 eingetragenen Richtung B.

Der Anschlagbügel 1 ist schmiedetechnisch als ein Stück hergestellt. Er weist zwei in einem Abstand D zueinander beabstandet zueinander angeordnete Befestigungsabschnitte 3a,3b und einen Anschlagabschnitt 4 auf, der brückenartig die Distanz D zwischen den Befestigungsabschnitten 3a,3b überspannt.

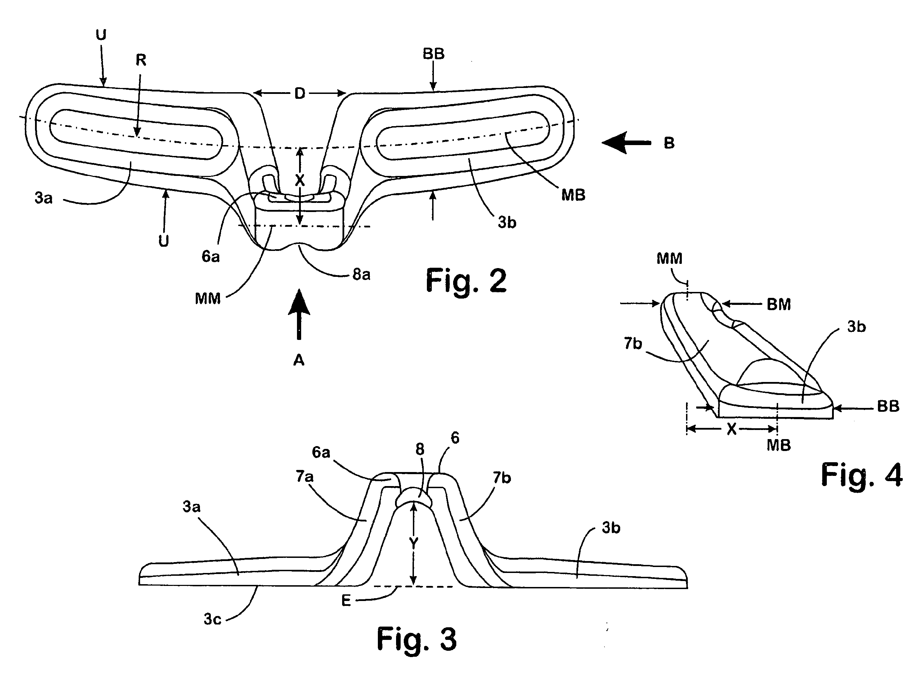

Die Befestigungsabschnitte 3a,3b sind in Draufsicht gesehen (Fig. 2) jeweils länglich mit einer leichten Krümmung ausgebildet. Die Krümmung der Mittellinie MB der Befestigungsabschnitte 3a,3b entspricht dabei dem Radius R eines Mittelkreises MK eines hier nicht dargestellten Ringflansches, auf dem der Anschlagbügel 1 montiert werden soll. Auf dem Mittelkreis MK liegen die Mittelpunkte von hier ebenfalls nicht gezeigten, in regelmäßigen Winkelabständen verteilt angeordneten Durchgangsöffnungen, die in den betreffenden Flansch eingeformt sind. Der Flansch kann Teil eines hier nicht gezeigten Turmelements für eine Windkraftanlage sein.

Zur Auflage auf die jeweilige Stirnfläche des Flansches weisen die Befestigungsabschnitte auf ihrer Unterseite jeweils eine plane Auflagefläche 3c auf.

In die Befestigungsabschnitte 3a,3b ist jeweils eine von der Oberseite bis zur Auflagefläche 3c des jeweiligen Befestigungsabschnitts reichende Langlochöffnung 5a,5b eingeformt, die sich annähernd über die gesamte Länge des jeweiligen Befestigungselements 3a,3b erstreckt und die in entsprechender Weise gekrümmt ist wie die gemeinsame Mittellinie MB der Befestigungsabschnitte 3a,3b.

Die Oberseite der die Langlochöffnungen 5a,5b begrenzenden Randbereiche 5c ist ebenfalls planeben ausgebildet und bildet eine Auflagefläche für hier nicht gezeigte Befestigungsschrauben, die zum Befestigen des Anschlagbügels 1 an dem Flansch durch die Langlochöffnungen 5a,5b und die mit den Langlochöffnungen 5a,5b in Deckung gebrachten Durchgangsöffnungen des Flanschs gesteckt werden.

Der Anschlagabschnitt 4 des Anschlagbügels 1 ist nach Art einer Brücke ausgebildet und weist einen Mittelabschnitt 6 auf, der von zwei Stützabschnitten 7a,7b getragen wird. Die Länge der Stützabschnitte 7a,7b legt dabei den Abstand Y des Mittelabschnitts 6 zur Ebene E der Auflagefläche 3c des Anschlagelements 1 fest.

Die Breite BM des Mittelabschnitts 6 ist kleiner als die Breite BB der Befestigungsabschnitte 5a,5b. In Draufsicht auf den Anschlagbügel 1 gesehen ist die Mittellinie MM des Mittelabschnitts 6 dabei gegenüber der Mittellinie MB der Befestigungsabschnitte 5a,5b um einen Abstand X soweit in Richtung der Außenseite des von der gekrümmten Mittellinie MB der Befestigungsabschnitte 5a,5b beschriebenen Bogens verschoben, dass der Mittelabschnitt 6 des Anschlagabschnitts 4 vollständig außerhalb der die Befestigungselemente 5a,5b in Draufsicht Einhüllenden U liegt (Fig. 2,3).

Die Stützabschnitte 7a,7b des Anschlagabschnitts 4 gehen von den einander zugeordneten Enden der Befestigungsabschnitte 5a,5b ab und verjüngen sich ausgehend von der Breite BB der Befestigungsabschnitte 5a,5b, bis sie an ihrem dem Mittelabschnitt 6 zugeordneten Ende die Breite BM des Mittelabschnitts 6 aufweisen. Die einander zugeordneten Innenseiten 7c,7d der Stützabschnitte 7a,7b laufen dabei in Richtung des Mittelabschnitts 6 umgekehrt V-förmig aufeinander zu und treffen sich in einer kehlenartigen, in die Unterseite des Mittelabschnitts 6 eingeformte Ausnehmung 8, die sich über die Breite BM des Mittelabschnitts 6 erstreckt. Dabei reicht die Ausnehmung 8 jeweils bis zu den freien Seitenflächen 6a,6b des Mittelabschnitts 6. Der in die bezogen auf den von der Mittellinie der Befestigungsabschnitte 5a,5b außen liegende Seitenfläche 6b des Mittelabschnitts 6 eingeformte Abschnitt 8a der Ausnehmung 8 ist dabei tiefer ausgeprägt, so dass dort eine nach Art einer Lagerschale ausgebildete Lagerfläche für das jeweilige hier nicht dargestellte Anschlagmittel gebildet ist, wenn die auf den Anschlagbügel 1 wirkende Last Q senkrecht zur Seitenfläche 6b ausgerichtet ist.

Letzteres ist beispielsweise dann der Fall, wenn ein liegend transportiertes Turmelement zunächst vertikal ausgerichtet und dann in die Horizontale gedreht wird. In dem von dem Anschlagabschnitt 4 seitlich umgrenzten Raum T steht dabei zwischen den beiden Befestigungsabschnitten 3 ein für das Einschwenken eines Anschlagelements, wie Schäkelbügel, Ring, Karabinerhaken oder ähnliches, benötigter Platz zur Verfügung.

Zusätzlich zu der Ausnehmung 8 sind auf der bezogen auf den von der Mittellinie MB beschriebenen Bogen innen liegenden Seite des Anschlagbügels 1 in die Übergangsbereiche zwischen den Stützabschnitten 7a,7b und dem Mittelabschnitt 6 jeweils eine Kehle 9a,9b eingeformt. Auch die Kehlen 9a,9b dienen dabei während des Ausrichtens des jeweiligen Bauteils als Führung eines Anschlagmittels, das durch den von dem Anschlagabschnitt 4 umgrenzten Raum T geführt ist.

### BEZUGSZEICHEN

- 1: Anschlagbügel
- 3a,3b: Befestigungsabschnitte
- 3c: Auflagefläche der Befestigungsabschnitte 3a,3b
- 4: Anschlagabschnitt
- 5a,5b: Langlochöffnungen der Befestigungselemente 3a,3b
- 5c: Randbereiche der Langlochöffnungen 5a,5b
- 6: Mittelabschnitt des Anschlagabschnitts 4
- 6a,6b: Seitenflächen des Mittelabschnitts 6
- 7a,7b: Stützabschnitte des Anschlagabschnitts 4
- 7c,7d: Innenseiten der Stützabschnitte 7a,7b
- 8: Ausnehmung
- 8a: Abschnitt der Ausnehmung 8
- 9a,9b: Kehle
- BB: Breite der Befestigungsabschnitte 5a,5b
- BM: Breite des Mittelabschnitts 6
- D: Abstand zwischen den Befestigungsabschnitten 3a,3b
- E: Ebene der Auflagefläche 3c des Anschlagelements 1
- MB: Mittellinie der Befestigungsabschnitte 3a,3b
- MK: Mittelkreis
- MM: Mittellinie des Befestigungsabschnitts 5a,5b
- Q: Last
- R: Radius des Mittelkreises MK
- T: von dem Anschlagabschnitt 4 seitlich umgrenzter Raum
- U: Einhüllende der Befestigungsabschnitte
- X: Abstand der Mittellinie MM von der Mittellinie MB in Draufsicht
- Y: Abstand des Mittelabschnitts 6 zur Ebene E der Auflagefläche 3c des Anschlagbügels 1

## Patentansprüche

1. Anschlagbügel, der dazu vorgesehen ist, ein Anschlagmittel, wie einen Schäkel, Haken oder Ring, mit einem Flansch, insbesondere mit einem Flansch eines Turmelementes einer Windkraftanlage, zu verbinden,
- wobei der Anschlagbügel (1) zwei Befestigungsabschnitte (3a,3b) aufweist, die mit einem Abstand (D) zueinander angeordnet sind und jeweils eine Anlagefläche (3c) zum Anlegen des Anschlagbügels (1) an den Flansch sowie einen Anschlagabschnitt (4) aufweisen,
- wobei in Draufsicht von der der Anlagefläche (3c) abgewandten Seite des Anschlagbügels (1) her gesehen die Mittellinie (M) des Mittelabschnitts (6) des Anschlagabschnitts (4) außerhalb der Einhüllenden (U) der Befestigungsabschnitte (3) angeordnet ist,
**dadurch gekennzeichnet, dass** der Anschlagabschnitt (4) aus zwei jeweils fest mit einem der Befestigungsabschnitte (3a,3b) verbundenen und auf diesem stehenden Stützabschnitten (7a,7b) und einem von diesen getragenen und fest mit diesen verbundenen Mittelabschnitt (6) gebildet ist, so dass der Anschlagabschnitt (4) den Abstand (D) zwischen den Befestigungsabschnitten (3a,3b) mit einem Abstand (Y) zu der Ebene (E) der Anlagefläche (3c) überbrückt.

2. Anschlagbügel nach Anspruch 1, **dadurch gekennzeichnet, dass in** Draufsicht von der den Anlageflächen (3c) abgewandten Seite des Anschlagbügels (1) her gesehen der Mittelabschnitt (6) des Anschlagabschnitts (4) insgesamt außerhalb der Einhüllenden (U) der Befestigungsabschnitte (3a,3b) angeordnet ist.

3. Anschlagbügel nach einem der voranstehenden Ansprüche, **dadurch gekennzeichnet, dass** der Anschlagbügel (1) einstückig ausgebildet ist.

4. Anschlagbügel nach Anspruch 3, **dadurch gekennzeichnet, dass** der Anschlagbügel (1) ein Schmiedeteil ist.

5. Anschlagbügel nach einem der voranstehenden Ansprüche, **dadurch gekennzeichnet, dass** mindestens die dem seitlich von den Stützabschnitten (7a,7b) des Anschlagabschnitts (4) begrenzten Raum (T) zugeordneten Innenseiten (7c,7d) des Anschlagabschnitts (4) spitzbogenförmig aufeinander zulaufen.

6. Anschlagbügel nach Anspruch 5, **dadurch gekennzeichnet, dass** die Innenseiten (7c,7d) der Stützabschnitte (7a,7b) umgekehrt V-förmig aufeinander zulaufen.

7. Anschlagbügel nach Anspruch 5 oder 6, **dadurch gekennzeichnet, dass** der Bereich, in dem die Innenseiten (7c,7d) der Stützabschnitte (7a,7b) aufeinander treffen, nach Art einer Kehle ausgerundet ist.

8. Anschlagbügel nach einem der voranstehenden Ansprüche, **dadurch gekennzeichnet, dass** die Breite der Stützabschnitte (7a,7b) ausgehend von dem ihnen jeweils zugeordneten Befestigungsabschnitt (3a,3b) in Richtung des Mittelabschnitts (6) abnimmt.

9. Anschlagbügel nach einem der voranstehenden Ansprüche, **dadurch gekennzeichnet, dass** der Mittelabschnitt (6) des Anschlagabschnitts (4) eine geringere Breite (BM) aufweist als die Befestigungsabschnitte (3a,3b).

10. Anschlagbügel nach einem der voranstehenden Ansprüche, **dadurch gekennzeichnet, dass** in mindestens einem der Übergangsbereiche, in denen die Stützabschnitte (7a,7b) zum Mittelabschnitt (6) übergehen, von dem vom Anschlagabschnitt (4) seitlich umgrenzten Raum (T) her eine kehlenartige Ausnehmung (9a,9b) eingeformt ist.

11. Anschlagbügel nach Anspruch 10, **dadurch gekennzeichnet, dass** die Ausnehmung (9a,9b) bis zur Außenseite (6a,6b) des jeweiligen Stützabschnitts (7a,7b) reicht.

12. Anschlagbügel nach einem der voranstehenden Ansprüche, **dadurch gekennzeichnet, dass** er spiegelsymmetrisch zu einer Ebene ausgebildet ist, die senkrecht zur Anlagefläche (3c) der Befestigungsabschnitte (3a,3b) ausgerichtet ist.

13. Anschlagbügel nach einem der voranstehenden Ansprüche, **dadurch gekennzeichnet, dass** in die Befestigungsabschnitte (3a,3b) senkrecht zur Anlagefläche (3c) ausgerichtete Durchgangsöffnungen (5a,5b) eingeformt sind.

14. Anschlagbügel nach Anspruch 13, **dadurch gekennzeichnet, dass** mindestens eine der Durchgangsöffnungen als Langloch (5a,5b) ausgebildet ist.

15. Anschlagbügel nach Anspruch 14, **dadurch gekennzeichnet,dass** das Langloch (5a,5b) bogenförmig ausgebildet ist.

16. Anschlagbügel nach Anspruch 15, **dadurch gekennzeichnet, dass** beide Befestigungsabschnitte (3a,3b) ein bogenförmiges Langloch (5a,5b) aufweisen und die Mittellinien (MB) der Langlöcher (5a,5b) auf einem gemeinsamen Bogen angeordnet sind.

17. Anschlagbügel nach einem der voranstehenden Ansprüche, **dadurch gekennzeichnet, dass** von dem von dem Anschlagabschnitt (4) seitlich begrenzten Raum (T) her in den Mittelabschnitt (6) eine kehlenartige Ausnehmung (8) eingeformt ist, welche ein Lager für das Anschlagmittel bildet.

18. Anschlagbügel nach Anspruch 17, **dadurch gekennzeichnet, dass** die Ausnehmung (8) mittig zwischen den Stützabschnitten (7a,7b) angeordnet ist.

19. Anschlagbügel nach einem der Ansprüche 17 oder 18, **dadurch gekennzeichnet, dass** die Ausnehmung (8) mindestens auf einer Seite (6a) des Anschlagelements (1) bis zur freien Oberseite des Mittelabschnitts (6) reicht.

## Claims

1. Connection bracket, which is provided in order to connect a connection means, such as a shackle, hook or ring, to a flange, in particular to a flange of a tower element of a wind turbine,
- wherein the connection bracket (1) has two fixing sections (3a, 3b), which are arranged at a distance (D) from each other and each have a support surface (3c) for laying the connection bracket (1) against the flange and a connection section (4),
- wherein, in a top view seen from the side of the connection bracket (1) remote from the support surface (3c), the centre line (M) of the centre section (6) of the connection section (4) is arranged outside the envelope (U) of the fixing sections (3),
**characterised in that** the connection section (4) is formed from two supporting sections (7a, 7b) each firmly connected to one of the fixing sections (3a, 3b) and standing thereon, and a centre section (6) carried by these supporting sections (7a, 7b) and firmly connected to them, such that the connection section (4) bridges the distance (D) between the fixing sections (3a, 3b) at a distance (Y) from the plane (E) of the support surface (3c).

2. Connection bracket according to Claim 1, **characterised in that** in a top view seen from the side of the connection bracket (1) remote from the support surfaces (3c), the centre section (6) of the connection section (4) is arranged entirely outside the envelope (U) of the fixing sections (3a, 3b).

3. Connection bracket according to any one of the preceding claims, **characterised in that** the connection bracket (1) is designed integrally.

4. Connection bracket according to Claim 3, **characterised in that** the connection bracket (1) is a forged part.

5. Connection bracket according to any one of the preceding claims, **characterised in that** at least the internal sides (7c, 7d) of the connection section (4) that are associated with the space (T) laterally delimited by the supporting sections (7a, 7b) of the connection section (4) converge in the form of a pointed arch.

6. Connection bracket according to Claim 5, **characterised in that** the internal sides (7c, 7d) of the supporting sections (7a, 7b) converge in an inverted V-shape.

7. Connection bracket according to Claim 5 or 6, **characterised in that** the region in which the internal sides (7c, 7d) of the supporting sections (7a, 7b) meet is rounded in the manner of a groove.

8. Connection bracket according to any one of the preceding claims, **characterised in that** the width of the supporting sections (7a, 7b) proceeding from the fixing section (3a, 3b) respectively associated with them decreases in the direction of the centre section (6).

9. Connection bracket according to any one of the preceding claims, **characterised in that** the centre section (6) of the connection section (4) has a lesser width (BM) than the fixing sections (3a, 3b).

10. Connection bracket according to any one of the preceding claims, **characterised in that** a groove-type recess (9a, 9b) is moulded in at least one of the transition regions, in which the supporting sections (7a, 7b) proceed to the centre section (6), from the space (T) laterally defined by the connection section (4).

11. Connection bracket according to Claim 10, **characterised in that** the recess (9a, 9b) reaches as far as the external side (6a, 6b) of the respective supporting section (7a, 7b).

12. Connection bracket according to any one of the preceding claims, **characterised in that** it is designed to be mirror-symmetrical to a plane, which is aligned perpendicular to the support surface (3c) of the fixing sections (3a, 3b).

13. Connection bracket according to any one of the preceding claims, **characterised in that** through-openings (5a, 5b) aligned perpendicular to the support surface (3c) are moulded into the fixing sections (3a, 3b).

14. Connection bracket according to Claim 13, **characterised in that** at least one of the through-openings is designed as an elongated hole (5a, 5b).

15. Connection bracket according to Claim 14, **characterised in that** the elongated hole (5a, 5b) is designed to be arc-shaped.

16. Connection bracket according to Claim 15, **characterised in that** both fixing sections (3a, 3b) have an arc-shaped elongated hole (5a, 5b) and the centre lines (MB) of the elongated holes (5a, 5b) are arranged on a common arc.

17. Connection bracket according to any one of the preceding claims, **characterised in that** a groove-type recess (8) is moulded into the centre section (6) from the space (T) laterally delimited by the connection section (4), which recess (8) forms a bearing for the connection means.

18. Connection bracket according to Claim 17, **characterised in that** the recess (8) is arranged centrally between the supporting sections (7a, 7b).

19. Connection bracket according to Claim 17 or 18, **characterised in that** the recess (8) at least on one side (6a) of the connection element (1) reaches as far as the free upper side of the centre section (6).

## Revendications

1. Etrier d'élingage, qui est prévu pour relier un moyen de suspension, comme une manille, un crochet ou un anneau, à une bride, en particulier à une bride d'un élément de mât d'une installation éolienne,
- sachant que l'étrier d'élingage (1) est doté de deux sections de fixation (3a, 3b), qui sont disposées à distance (D) l'une de l'autre et qui sont dotées chacune d'une surface de positionnement (3c) pour appliquer l'étrier d'élingage (1) contre la bride, ainsi que d'une section de suspension (4),
- sachant que, vue d'en haut, du côté de l'étrier d'élingage (1) opposé à la surface de positionnement (3c), la ligne médiane (M) de la section centrale (6) de l'étrier d'élingage (1) est disposée en dehors des extrémités enveloppantes (U) des sections de fixation (3),
**caractérisé en ce que** la section de suspension (4) est composée de deux sections de support (7a, 7b), qui sont reliées chacune à l'une des sections de fixation (3a, 3b) et respectivement posées sur elles, et d'une section centrale (6), qui est portée par et reliée à celles-ci, de sorte que la section de positionnement (4) couvre la distance (D) entre les sections de fixation (3a, 3b), à une distance (Y) du plan (E) de la surface de positionnement (3c).

2. Etrier d'élingage selon la revendication 1, **caractérisé en ce que**, vue d'en haut, du côté de l'étrier d'élingage (1) opposé à la surface de positionnement (3c), la ligne médiane (M) de la section centrale (6) de la section de suspension (4) est disposée entièrement en dehors des extrémités enveloppantes (U) des sections de fixation (3a, 3b)

3. Étrier d'élingage selon l'une des revendications précédentes, **caractérisé en ce que** ledit étrier d'élingage (1) est formé d'une pièce.

4. Étrier d'élingage selon la revendication 3, **caractérisé en ce que** ledit étrier d'élingage (1) est une pièce forgée.

5. Étrier d'élingage selon l'une des revendications précédentes, **caractérisé en ce que** au moins les faces latérales (7c, 7d) de l'étrier d'élingage (1), associées à l'espace (T) limité latéralement par les sections de support (7a, 7b) de la section de suspension (4), s'étendent l'une vers l'autre en formant un arc brisé

6. Étrier d'élingage selon la revendication 5, **caractérisé en ce que** les faces latérales (7c, 7d) des sections de support (7a, 7b) s'étendent l'une vers l'autre en forme de V renversé.

7. Étrier d'élingage selon revendication 5 ou 6, **caractérisé en ce que** la zone, dans laquelle les faces latérales (7c, 7d) des sections de support (7a, 7b) se rencontrent, est arrondie à la manière d'une gorge.

8. Étrier d'élingage selon l'une des revendications précédentes, **caractérisé en ce que**, partant de la section de fixation (3a, 3b), qui leur est respectivement associée, la largeur des sections de support (7a, 7b) diminue en direction de la section centrale (6).

9. Étrier d'élingage selon l'une des revendications précédentes, **caractérisé en ce que** la section centrale (6) de la section de suspension (4) est dotée d'une largeur (BM), qui est inférieure à celle des sections de fixation (3a, 3b).

10. Étrier d'élingage selon l'une des revendications précédentes, **caractérisé en ce que** au moins l'une des zones de transition, dans lesquelles les sections de support (7a, 7b) rejoignent la section centrale (6), un évidement (8a, 9b) en forme de gorge est formé à partir de l'espace (T) limité latéralement par la section de suspension (4).

11. Étrier d'élingage selon la revendication 10, **caractérisé en ce que** l'évidement (9a, 9b) s'étend jusqu'à la face extérieure (6a, 6b) de la section de support (7a, 7b) respective.

12. Etrier d'élingage selon l'une des revendications précédentes, **caractérisé en ce que** celui-ci est réalisé en symétrie spéculaire par rapport à un plan, qui est orienté perpendiculairement par rapport à la surface de positionnement (3c) des sections de fixation (3a, 3b).

13. Étrier d'élingage selon l'une des revendications précédentes, **caractérisé en ce que**, dans les sections de fixation (3a, 3b), sont formées des Ouvertures de passage (5a, 5b), qui sont orientées perpendiculairement par rapport à la surface de positionnement (3c).

14. Étrier d'élingage selon la revendication 13, **caractérisé en ce que** l'une des ouvertures de passages au moins est réalisée en forme de trou oblong (5a, 5b).

15. Étrier d'élingage selon la revendication 14, **caractérisé en ce que** le trou oblong (5a, 5b) est réalisé en forme d'arc.

16. Étrier d'élingage selon la revendication 15, **caractérisé en ce que** les deux sections de fixation (3a, 3b) sont dotées d'un trou oblong (5a, 5b) en forme d'arc et que les lignes centrales (MB) des trous oblongs (5a, 5b) sont disposés sur un arc commun.

17. Étrier d'élingage selon l'une des revendications précédentes, **caractérisé en ce que**, partant de l'espace (T), limité latéralement par la section de suspension (4), est formé, dans la section centrale (6), un évidement en forme de gorge (8), qui forme un palier pour le moyen de suspension.

18. Étrier d'élingage selon la revendication 17, **caractérisé en ce que** l'évidement (8) est disposé centralement entre les sections de support (7a, 7b).

19. Étrier d'élingage selon l'une des revendications 17 ou 18, **caractérisé en ce que** l'évidement (8) parvient, au moins sur un côté (6a) de l'étrier d'élingage (1), jusqu'à la surface libre de la section centrale (6).
